(19) Europäisches Patentamt
European Patent Office
Office européen des brevets

(11) **EP 2 289 677 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(51) Int Cl.:
**B27N 9/00** *(2006.01)*          **E04B 1/94** *(2006.01)*
**B27D 1/04** *(2006.01)*          **B27D 1/06** *(2006.01)*
**B32B 7/12** *(2006.01)*          **B32B 21/00** *(2006.01)*
**B32B 27/18** *(2006.01)*          **B32B 27/20** *(2006.01)*
**B32B 27/24** *(2006.01)*

(21) Anmeldenummer: **10008524.0**

(22) Anmeldetag: **16.08.2010**

(54) **Stäbchensperrholzplatte**

Plywood board

Panneaux de contreplaqué en petites tiges

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.08.2009 DE 202009011386 U**

(43) Veröffentlichungstag der Anmeldung:
**02.03.2011 Patentblatt 2011/09**

(73) Patentinhaber: **SWL-Tischlerplatten Betriebs-GmbH**
**33449 Langenberg (DE)**

(72) Erfinder:
• **Der Erfinder hat auf seine Nennung verzichtet.**

(74) Vertreter: **Manske, Jörg et al**
**Fritz Patent- und Rechtsanwälte**
**Partnerschaft mbB**
**Postfach 1580**
**59705 Arnsberg (DE)**

(56) Entgegenhaltungen:
**EP-A1- 2 208 594          EP-A2- 1 199 319**
**CH-A- 233 120          DE-C- 600 000**
**FR-A- 896 990          GB-A- 1 439 582**

• **Graphit Kropfmühl AG: "BLÄHGRAPHIT", Graphit Kropfmühl AG , 31. August 2005 (2005-08-31), XP002614627, Gefunden im Internet: URL:http://graphite.de/pdf/ blaehgraphit.pd f [gefunden am 2010-12-16]**

**Beschreibung**

Die vorliegende Erfindung betrifft eine Stäbchensperrholzplatte, gemäß dem Oberbegriff des Anspruchs 1. Eine solche Stäbchensperrholzplatte ist aus CH 233 120 A bekannt.

Stäbchensperrholzplatten der eingangs genannten Art sind aus dem Stand der Technik bekannt. Sie werden häufig auch als Tischlerplatten bezeichnet und im Möbelbau sowie im Messebau, Innenausbau, Schiffs-, Fahrzeug-, und Wohnwagenbau eingesetzt. Stäbchensperrholzplatten sind im Vergleich zu anderen Werkstoffen relativ leicht, aber dennoch sehr formstabil und biegesteif.

Die DE 600 000 C offenbart eine Stäbchensperrholzplatte, bei der der Sperrholzplattenkern oben durch eine Pressholzplatte abgedeckt ist, die durch kalte Verleimung mit dem Sperrholzkern verbunden ist. Die CH 230 120 A offenbart eine Bauplatte mit zwei Abschlussplatten, zwischen denen eine Mittellage aus parallel zueinanderliegenden, an den Längsrändern offenen Furnierholzröhrchen angeordnet ist. Die Röhrchen und die Deckplatten sind ebenfalls miteinander verleimt. In diesen beiden Druckschriften finden sich keine Angaben über die Art des verwendeten Leims, insbesondere auch keinerlei Angaben zu dessen Eigenschaften im Brandfall.

Die FR 896 990 A offenbart eine Stäbchensperrholzplatte der eingangs genannten Art, bei der Flammschutzfolien aus Metall (zum Beispiel aus Aluminium) oder Asbest vorgesehen sind. Die im Internet unter "www.graphite.de/pdf/blaehgraphit.pdf" zu findende Veröffentlichung beschreibt die Verwendung von Blähgraphitfolien als Flammschutzfolien.

Die GB 1 439 582 A offenbart die Verwendung eines brandhemmenden Leims, vorzugsweise Wasserglas, zum Verleimen von Furnierstäben.

Ein Nachteil der aus dem Stand der Technik bekannten Stäbchensperrholzplatten sind ihre Eigenschaften im Brandfall.

Hier setzt die vorliegende Erfindung an und macht es sich zur Aufgabe, eine Stäbchensperrholzplatte der eingangs genannten Art zur Verfügung zu stellen, die im Brandfall bessere Eigenschaften als die aus dem Stand der Technik bekannten Stäbchensperrholzplatten aufweist.

Die Lösung dieser Aufgabe liefert eine Stäbchensperrholzplatte der eingangs genannten Art mit den Merkmalen des kennzeichnenden Teils des Anspruchs 1. Die Unteransprüche betreffen vorteilhafte Weiterbildungen der Erfindung.

Eine erfindungsgemäße Stäbchensperrholzplatte zeichnet sich dadurch aus, dass der Leim, mittels dessen die Holzstäbchen der Mittellage miteinander verleimt sind und die beiden Deckschichten auf der Mittellage aufgeleimt sind, einen Blähgraphitanteil aufweist. Die Holzstäbchen der Mittellage der Stäbchensperrholzplatte bestehen vorzugsweise aus Fichtenholz, Kiefernholz, Pappelholz, Tannenholz oder aus Überseehölzern (Fromager, Albasia, Paulownia, Okoume, Gabun, etc). Die Holzstämme, aus denen die Holzstäbchen für die Stäbchensperrholzplatte hergestellt werden, werden zunächst geschält. Dadurch werden Schälfurnierstreifen erhalten, die vorzugsweise eine Dicke von etwa 1,5 bis etwa 8,0 mm, insbesondere eine Dicke von etwa 1,5 mm bis etwa 6,5 mm, haben. Mehrere Lagen dieser Schälfurnierstreifen werden anschließend miteinander zu Platten verleimt. Dabei wird der blähgraphithaltige Leim verwendet. Diese Platten werden danach orthogonal zur Richtung der Schälfurnierlagen in der gewünschten Dicke der Mittellage aufgetrennt. Auf diese Weise werden Teilblöcke aus den Platten erhalten, die zur Bildung der Mittellage der Stäbchensperrholzplatte mittels des blähgraphithaltigen Leims miteinander verleimt werden. Anschließend werden die Deckschichten mittels des blähgraphithaltigen Leims beidseitig quer zur Mittellage aufgeleimt. Die auf diese Weise hergestellte Stäbchensperrholzplatte kann dann weiterverarbeitet werden.

Es hat sich gezeigt, dass sich durch die Verwendung des blähgrahithaltigen Leims zum Verleimen die Eigenschaften der Stäbchensperrholzplatte im Brandfall erheblich verbessern lassen. Im Brandfall dehnt sich das Blähgraphit im Leim aus. Durch die Expansion des Blähgraphits bildet sich eine sehr große Oberfläche, die eine schnelle Oxidation des Kohlenstoffs ermöglicht. Dadurch wird der Umgebungsluft der Sauerstoff entzogen. Die Umgebungsluft wird somit inertisiert und wirkt dann gewissermaßen als Löschmittel gegen den Brand und erstickt ihn. Insgesamt kann durch die Verwendung des Blähgraphits im Leim die Brandausweitung verlangsamt oder auch ganz eingedämmt werden, so dass insbesondere der Bildung toxischer Gase und Rauch wirksam entgegengewirkt werden kann. Die erfindungsgemäße Stäbchensperrholzplatte weist im Vergleich zu den aus dem Stand der Technik bekannten Stäbchensperrholzplatten erheblich verbesserte Eigenschaften im Brandfall auf.

Um im Brandfall besonders vorteilhafte Eigenschaften der Stäbchensperrholzplatte zu erhalten, wird dem Leim vorzugsweise Blähgraphit zugesetzt, der eine möglichst niedrige Starttemperatur von etwa 150° C aufweist.

Erfindungsgemäß wird weiterhin vorgeschlagen, dass der Massenanteil w der Blähgraphitkomponente $w = m_{Blähgraphit} : (m_{Blähgraphit} + m_{Leim})$ zwischen 9/100 und 1/3 liegt. Dabei bezeichnen $m_{Blähgraphit}$ die Masse der Blähgraphitkomponente und $m_{Leim}$ die Masse der Leimkomponente. In einer besonders vorteilhaften Ausführungsform ist vorgesehen, dass der Massenanteil w der Blähgraphitkomponente 0,2 bis 0,3 beträgt.

Vorzugsweise beträgt der Massenanteil $\omega$ der Blähgraphitkomponente 0,23 bis 0,25. Dadurch kann in besonders vorteilhafter Weise eine gute Verarbeitbarkeit des Leim-Blähgraphit-Gemischs zum Verleimen der Holzstäbchen der Mittellage miteinander sowie der Deckschichten mit der Mittellage erreicht werden.

Um die Eigenschaften der Stäbchensperrholzplatte im Brandfall weiter zu verbessern, ist in einer besonders bevorzugten Ausführungsform vorgesehen, dass die Deckschichten, die vorzugsweise eine Dicke von etwa 2 mm haben, aus schwerentflammbaren Plattenwerkstoffen bestehen. Vorzugsweise können die Deckschichten als hochdichte Holzfaserplatten (HDF-Platten), mitteldichte Holzfaserplatten (MDF-Platten), Hartfaserplatten, Spanplatten oder Sperrholzplatten (insbesondere Buchensperrholzplatten) ausgebildet sein. Die Mittellage wird bei der Herstellung mit den beiden Deckschichten unter Zwischenlage zweier Leimfugen verpresst.

Mit den hier vorgestellten Maßnahmen ist es in besonders vorteilhafter Weise möglich, eine schwerentflammbare Stäbchensperrholzplatte nach der Norm DIN EN 13501 (Teil 1, 2007-05) in der Klasse C - S2, d0 zu erhalten.

Überraschend hat es sich gezeigt, dass durch den Einsatz besonders dünner Schälfurniere bis zu einer Stärke von 3 mm die Konzentration des brandhemmenden Blähgraphits derart erhöht werden kann, dass eine schwerentflammbare Stäbchensperrholzplatte nach der Norm DIN EN 13501 (Teil 1, 2007-05) in der Klasse B - S1, d0 erhalten werden kann.

Gemäß einem weiteren Aspekt betrifft die vorliegende Erfindung eine Stabsperrholzplatte, umfassend eine Mittellage aus einer Mehrzahl parallel zueinander ausgerichteter, miteinander verleimter Holzstäbe und zwei Deckschichten, die beidseitig quer zur Mittellage aufgeleimt sind. Um die Eigenschaften einer derartigen Stabsperrholzplatte im Brandfall zu verbessern, wird gemäß Anspruch 8 vorgeschlagen, dass der Leim, mittels dessen die Holzstäbe der Mittellage miteinander verleimt sind und die beiden Deckschichten auf der Mittellage aufgeleimt sind, einen Blähgraphitanteil aufweist. Von einer Stäbchensperrholzplatte unterscheidet sich eine Stabsperrholzplatte insbesondere dadurch, dass die Stäbe der Mittellage mit etwa 24 bis 50 mm eine größere Breite als die Stäbchen einer Stäbchensperrholzplatte aufweisen. Die erfindungsgemäße Stabsperrholzplatte besitzt im Vergleich zu den aus dem Stand der Technik bekannten Stabsperrholzplatten im Brandfall erheblich verbesserte Eigenschaften.

Erfindungsgemäß liegt der Massenanteil $\omega$ der Blähgraphitkomponente $\omega = m_{Blähgraphit} : (m_{Blähgraphit} + m_{Leim})$ auch bei der Stabsperrholzplatte zwischen 9/100 und 1/3, wobei $m_{Blähgraphit}$ die Masse der Blähgraphitkomponente ist und $m_{Leim}$ die Masse der Leimkomponente ist. Vorzugsweise kann der Massenanteil w der Blähgraphitkomponente 0,2 bis 0,3, insbesondere 0,23 bis 0,24, betragen. Um im Brandfall besonders vorteilhafte Eigenschaften der Stabsperrholzplatte zu erhalten, wird dem Leim vorzugsweise Blähgraphit zugesetzt, der eine möglichst niedrige Starttemperatur von etwa 150° C aufweist.

In einer bevorzugten Ausführungsform wird vorgeschlagen, dass die Deckschichten aus schwerentflammbaren Plattenwerkstoffen bestehen.

Sowohl bei der Stäbchensperrholzplatte als auch bei der Stabsperrholzplatte sind Ausführungsformen mit hochdichten Faserplatten (HDF-Platten), mitteldichten Faserplatten (MDF-Platten), Hartfaserplatten, Spanplatten oder Sperrholzplatten oder Schälfurnieren jeglicher Holzart als Deck- und/oder Absperrschichten möglich.

Mit der Zugabe von Blähgraphit zu dem für das Verleimen einzusetzenden Leim können nicht nur Stab- beziehungsweise Stäbchensperrholzplatten (so genannten Tischlerplatten), sondern auch Sperrholzplatten, hochdichten Faserplatten (HDF-Platten), mitteldichten Faserplatten (MDF-Platten) sowie Hartfaserplatten schwer entflammbare Eigenschaften verliehen werden. So können insbesondere die Brandeigenschaften von Sperrhölzern (in verschiedenen Ausführungsformen und Holzarten) durch die Blähgraphitzugabe zu dem Leim stark verbessert werden. Auch hier kann mit den oben genannten Deckmaterialien gearbeitet werden. Das Sperrholz kann auch in roher Ausführung (also ohne zusätzliche Deck- und/oder Absperrschichten) schwer entflammbar ausgeführt werden.

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt

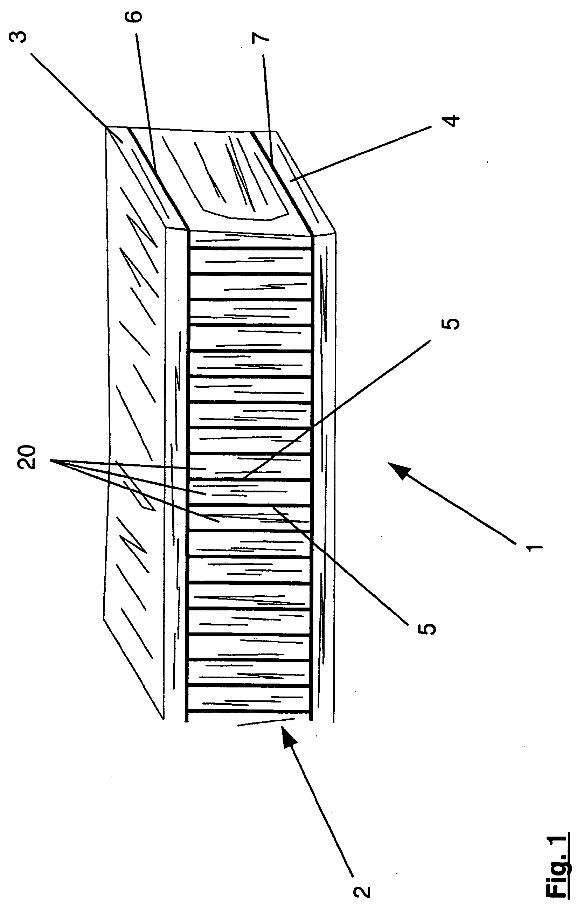

Fig. 1    eine perspektivische Ansicht eines Teils einer Stäbchensperrholzplatte gemäß einem bevorzugten Ausführungsbeispiel der vorliegenden Erfindung.

Eine Stäbchensperrholzplatte 1, die gemäß einem bevorzugten Ausführungsbeispiel der vorliegenden Erfindung ausgeführt ist, umfasst eine Mittellage 2 aus einer Mehrzahl parallel zueinander ausgerichteter und miteinander verleimter Holzstäbchen 20, die hochkant zur Ebene der Stäbchensperrholzplatte 1 orientiert sind, und eine erste Deckschicht 3 und eine zweite Deckschicht 4, die auf der Mittellage 2 aufgeleimt sind. Die beiden Deckschichten 3, 4 haben vorzugsweise eine Dicke von etwa 2 mm und erstrecken sich auf beiden Seiten der Mittellage 2 in deren Querrichtung. Die Holzstäbchen 20 der Mittellage 2 bestehen vorzugsweise aus Fichtenholz, Kiefernholz, Pappelholz, Tannenholz oder aus Überseehölzern (Fromager, Albasia, Paulownia, Okoume, Gabun, etc).

Die Holzstämme, aus denen die Holzstäbchen 20 hergestellt werden, werden zunächst geschält. Dadurch werden Schälfurnierstreifen gebildet, die vorzugsweise eine Dicke von etwa 1,5 mm bis etwa 8 mm, insbesondere eine Dicke von etwa 1,5 mm bis 6,5 mm, haben. Mehrere Lagen dieser Schälfurnierstreifen werden anschließend miteinander zu Platten verleimt. Diese Platten werden danach orthogonal zur Richtung der Schälfurnierlagen in der gewünschten Dicke der Mittellage 2 aufgetrennt. Dadurch werden Teilblöcke aus den Platten erhalten, die zur Bildung der Mittellage 2 der Stäbchensperrholzplatte 1 wiederum miteinander verleimt werden. Anschließend werden die Deckschichten 3, 4 auf die Mittellage 2 aufgeleimt. In Fig. 1 ist zwischen benachbarten Holzstäbchen 20 der Mittellage 2 jeweils eine entsprechende Leimfuge 5 zu erkennen. Die entsprechenden Leimfugen 6, 7 zwischen den beiden Deckschichten 3, 4 und der Mittellage 2 sind ebenfalls in Fig. 1 zu erkennen.

Der Leim (vorzugsweise ein Melaminharzleim), der zur Herstellung der Leimfugen 5, 6, 7 verwendet wird, weist einen Blähgraphitanteil auf. Der Massenanteil w der Blähgraphitkomponente, also die relative Masse dieser Komponente an der Gesamtmasse des Stoffgemischs, das aus der Leimkomponente und der Blähgraphitkomponente gebildet wird, ist wie folgt definiert:

$$\omega = m_{Blähgraphit} : (m_{Blähgraphit} + m_{Leim})$$

wobei $m_{Blähgraphit}$ die Masse der Blähgraphitkomponente ist und $m_{Leim}$ die Masse der Leimkomponente ist.

Vorzugsweise liegt der Massenanteil $\omega$ der Blähgraphitkomponente zwischen 9/100 und 1/3. Besonders vorteilhaft ist ein Massenanteil w zwischen 0,2 und 0,3, insbesondere zwischen 0,23 und 0,25, um eine gute Verarbeitbarkeit des Leim-Blähgraphit-Stoffgemischs zu gewährleisten. Wenn zum Beispiel ein Blähgraphit-Leim-Gemisch zum Verleimen der Holzstäbchen 20 der Mittellagen 2 und der Deckschichten 3, 4 von Stäbchensperrholzplatten 1 angesetzt wird, bei dem 50 kg Leimmasse verwendet wird, so werden dieser Leimmasse zwischen 5 kg und 25 kg, vorzugsweise etwa 15 kg (30% bezogen auf 50 kg Leim, $\omega$=0,23077), Blähgraphit zugesetzt.

Um im Brandfall besonders vorteilhafte Eigenschaften zu erhalten, wird dem Leim vorzugsweise Blähgraphit zugesetzt, der eine möglichst niedrige Starttemperatur von etwa 150° C aufweist.

Die Deckschichten 3, 4 bestehen vorzugsweise aus schwerentflammbaren Plattenwerkstoffen und können zum Beispiel durch eine hochdichte Holzfaserplatte (HDF-Platte), eine mitteldichte Holzfaserplatte (MDF-Platte), eine Spanplatte oder eine Buchensperrholzplatte gebildet sein. Bei der Herstellung wird die Mittellage 2 mit den beiden Deckschichten 3, 4 unter Zwischelage der Leimfugen 6, 7 verpresst.

Mit diesen Maßnahmen ist es in vorteilhafter Weise möglich, eine schwerentflammbare Stäbchensperrholzplatte 1 nach der Norm DIN EN 13501 (Teil 1, 2007-05) in der Klasse C - S2, d0 zu erhalten, die im Vergleich zu den aus dem Stand der Technik bekannten Stäbchensperrholzplatten erheblich verbesserte Eigenschaften im Brandfall aufweist.

Überraschend hat es sich gezeigt, dass durch den Einsatz besonders dünner Schälfurniere bis zu einer Stärke von 3 mm die Konzentration des brandhemmenden Blähgraphits derart erhöht werden kann, dass eine schwerentflammbare Stäbchensperrholzplatte 1 nach der Norm DIN EN 13501 (Teil 1, 2007-05) in der Klasse B - S1, d0 erhalten werden kann.

Im Brandfall expandiert das Blähgraphit im Leim, der zum Verleimen der Holzstäbchen 20 der Mittellage 2 untereinander und zum Aufleimen der Deckschichten 3, 4 verwendet wurde. Durch die Expansion des Blähgraphits bildet sich eine sehr große Oberfläche, die eine schnelle Oxidation des Kohlenstoffs ermöglicht. Dadurch wird der Umgebungsluft der Sauerstoff entzogen. Die Umgebungsluft wird somit inertisiert und wirkt dann gewissermaßen als Löschmittel gegen den Brand und erstickt ihn. Insgesamt kann durch die Verwendung des Blähgraphits die Brandausweitung verlangsamt oder auch ganz eingedämmt werden, so dass insbesondere der Bildung toxischer Gase und Rauch wirksam entgegengewirkt werden kann.

Das vorstehend skizzierte grundlegende Konzept zur Verbesserung der Brandeigenschaften kann auch auf Stabsperrholzplatten übertragen werden, die sich von Stäbchensperrholzplatten insbesondere dadurch unterscheiden, dass die Stäbe der Mittellage mit etwa 24 bis 50 mm eine größere Breite als die Holzstäbchen 20 der Mittellage 2 aufweisen. Durch den Zusatz von Blähgraphit zu dem für das Aufleimen der Deckschichten eingesetzten Leim lassen sich Stabsperrholzplatten schaffen, die im Vergleich zu den aus dem Stand der Technik bekannten Lösungen im Brandfall erheblich verbesserte Eigenschaften aufweisen.

Mit der Zugabe von Blähgraphit zu dem für das Verleimen einzusetzenden Leim können nicht nur Stab- beziehungsweise Stäbchensperrholzplatten (so genannten Tischlerplatten), sondern auch Sperrholzplatten, hochdichten Faserplatten (HDF-Platten), mitteldichten Faserplatten (MDF-Platten) sowie Hartfaserplatten schwer entflammbare Eigenschaften verliehen werden. So können insbesondere die Brandeigenschaften von Sperrhölzern (in verschiedenen Ausführungsformen und Holzarten) durch die Blähgraphitzugabe zu dem Leim stark verbessert werden. Auch hier kann mit den oben genannten Deckmaterialien gearbeitet werden. Das Sperrholz kann auch in roher Ausführung (also ohne zusätzliche Deck- und/oder Absperrschichten) schwer entflammbar ausgeführt werden.

**Patentansprüche**

1. Stäbchensperrholzplatte (1), umfassend eine Mittellage (2) aus einer Mehrzahl parallel zueinander ausgerichteter, miteinander verleimter Holzstäbchen (20) und zwei Deckschichten (3, 4), die beidseitig quer zur Mittellage (2) aufgeleimt sind, **dadurch gekennzeichnet, dass** der Leim, mittels dessen die Holzstäbchen (20) der Mittellage (2) miteinander verleimt sind und die beiden Deckschichten (3, 4) auf der Mittellage (2) aufgeleimt sind, einen Blähgraphitanteil aufweist, wobei der Massenanteil $\omega$ der Blähgraphitkomponente $\omega = m_{Blähgraphit} : (M_{Blähgraphit} + m_{Leim})$ zwischen 9/100 und 1/3 liegt, wobei $m_{Blähgraphit}$ die Masse der Blähgraphitkomponente ist und $m_{Leim}$ die Masse der Leimkomponente ist.

2. Stäbchensperrholzplatte (1) nach Anspruch 1, **dadurch gekennzeichnet, dass** der Massenanteil $\omega$ der Blähgraphitkomponente 0,2 bis 0,3 beträgt.

3. Stäbchensperrholzplatte (1) nach Anspruch 1 oder 2, **dadurch gekennzeichnet, dass** der Massenanteil $\omega$ der Blähgraphitkomponente 0,23 bis 0,24 beträgt.

4. Stäbchensperrholzplatte (1) nach einem der Ansprüche 1 bis 3 **dadurch gekennzeichnet, dass** die Deckschichten (3, 4) aus schwerentflammbaren Plattenwerkstoffen bestehen.

5. Stäbchensperrholzplatte (1) nach einem der Ansprüche 1 bis 4, **dadurch gekennzeichnet, dass** die Deckschichten (3, 4) eine Dicke von etwa 2 mm haben.

6. Stäbchensperrholzplatte (1) nach einem der Ansprüche 1 bis 5 **dadurch gekennzeichnet, dass** die Holzstäbchen (20) aus Schälfurnierstreifen gebildet sind, die eine Dicke von etwa 1,5 mm bis etwa 8 mm, insbesondere eine Dicke von etwa 1,5 mm bis etwa 6,5 mm, haben.

7. Stäbchensperrholzplatte (1) nach Anspruch 6, **dadurch gekennzeichnet, dass** die Schälfurnierstreifen eine maximale Dicke von 3 mm haben.

8. Stabsperrholzplatte, umfassend eine Mittellage aus einer Mehrzahl parallel zueinander ausgerichteter, miteinander verleimter Holzstäbe und zwei Deckschichten, die beidseitig quer zur Mittellage aufgeleimt sind, **dadurch gekennzeichnet, dass** der Leim, mittels dessen die Holzstäbe der Mittellage miteinander verleimt sind und die beiden Deckschichten auf der Mittellage aufgeleimt sind, einen Blähgraphitanteil aufweist, wobei der Massenanteil $\omega$ der Blähgraphitkomponente $\omega = m_{Blähgraphit} : (M_{Blähgraphit} + m_{Leim})$ zwischen 9/100 und 1/3 liegt, wobei $m_{Blähgraphit}$ die Masse der Blähgraphitkomponente ist und $m_{Leim}$ die Masse der Leimkomponente ist..

9. Stabsperrholzplatte nach Anspruch 8, **dadurch gekennzeichnet, dass** die Deckschichten (3, 4) aus schwerentflammbaren Plattenwerkstoffen bestehen.

**Claims**

1. Laminboard (1) comprising a middle layer (2) made of a plurality of thin strips of wood (20) oriented parallel to one another and glued to one another, and two covering layers (3, 4), which are glued on both sides transversely with respect to the middle layer (2), **characterized in that** the glue by means of which the thin strips of wood (20) of the middle layer (2) are glued to one another and the two covering layers (3, 4) are glued to the middle layer (2) has a proportion of expanded graphite, wherein the proportion by mass $\omega$ of the expanded graphite component

$$\omega = m_{Blähgraphit} : (m_{Blähgraphit} + m_{Leim})$$

lies between 9/100 and 1/3, where $m_{Blähgraphit}$ is the mass of the expanded graphite component and $m_{Leim}$ is the mass of the glue component.

2. Laminboard (1) according to Claim 1, **characterized in that** the proportion by mass $\omega$ of the expanded graphite component is 0.2 to 0.3.

3. Laminboard (1) according to Claim 1 or 2, **characterized in that** the proportion by mass $\omega$ of the expanded graphite component is 0.23 to 0.24.

4. Laminboard (1) according to one of Claims 1 to 3, **characterized in that** the covering layers (3, 4) are composed of flame-retardant board materials.

**5.** Laminboard (1) according to one of Claims 1 to 4, **characterized in that** the covering layers (3, 4) have a thickness of about 2 mm.

**6.** Laminboard (1) according to one of Claims 1 to 5, **characterized in that** the thin strips of wood (20) are formed from veneer strips which have a thickness of about 1.5 mm to about 8 mm, in particular a thickness of about 1.5 mm to about 6.5 mm.

**7.** Laminboard (1) according to Claim 6, **characterized in that** the veneer strips have a maximum thickness of 3 mm.

**8.** Blockboard comprising a middle layer made of a plurality of strips of wood oriented parallel to one another and glued to one another and two covering layers, which are glued on both sides transversely with respect to the middle layer, **characterized in that** the glue by means of which the strips of wood of the middle layer are glued to one another and the two covering layers are glued onto the middle layer has a proportion of expanded graphite, wherein the proportion by mass $\omega$ of the expanded graphite component

$$\omega = m_{\text{Blähgraphit}} : (m_{\text{Blähgraphit}} + m_{\text{Leim}})$$

lies between 9/100 and 1/3, where $m_{\text{Blähgraphit}}$ is the mass of the expanded graphite component and $m_{\text{Leim}}$ is the mass of the glue component.

**9.** Blockboard according to Claim 8, **characterized in that** the covering layers (3, 4) are composed of flame-retardant board materials.

**Revendications**

**1.** Panneau de contreplaqué en petites tiges (1), comprenant une couche centrale (2) constituée d'une pluralité de petites tiges de bois (20) orientées parallèlement les unes aux autres et collées ensemble et de deux couches de couverture (3, 4) qui sont collées des deux côtés transversalement à la couche centrale (2), **caractérisé en ce que** la colle avec laquelle les petites tiges de bois (20) de la couche centrale (2) sont collées ensemble et les deux couches de couverture (3, 4) sont collées sur la couche centrale (2) présente une proportion de graphite expansé, la proportion en masse $\omega$ du constituant de graphite expansé $\omega = m_{\text{Blähgraphit}} : (m_{\text{Blähgraphit}} + m_{\text{Leim}})$ étant comprise entre 9/100 et 1/3, $m_{\text{Blähgraphit}}$ étant la masse du constituant de graphite expansé et $m_{\text{Leim}}$ étant la masse du constituant de colle.

**2.** Panneau de contreplaqué en petites tiges (1) selon la revendication 1, **caractérisé en ce que** la proportion en masse $\omega$ du constituant de graphite expansé est de 0,2 à 0,3.

**3.** Panneau de contreplaqué en petites tiges (1) selon la revendication 1 ou 2, **caractérisé en ce que** la proportion en masse $\omega$ du constituant de graphite expansé est de 0,23 à 0,24.

**4.** Panneau de contreplaqué en petites tiges (1) selon l'une quelconque des revendications 1 à 3, **caractérisé en ce que** les couches de couverture (3, 4) se composent de matériaux de plaque difficilement inflammables.

**5.** Panneau de contreplaqué en petites tiges (1) selon l'une quelconque des revendications 1 à 4, **caractérisé en ce que** les couches de couverture (3, 4) présentent une épaisseur d'environ 2 mm.

**6.** Panneau de contreplaqué en petites tiges (1) selon l'une quelconque des revendications 1 à 5, **caractérisé en ce que** les petites tiges de bois (20) sont formées de rubans de placage déroulé qui présentent une épaisseur d'environ 1,5 mm à environ 8 mm, en particulier une épaisseur d'environ 1,5 mm à environ 6,5 mm.

**7.** Panneau de contreplaqué en petites tiges (1) selon la revendication 6, **caractérisé en ce que** les rubans de placage déroulé présentent une épaisseur maximale de 3 mm.

**EP 2 289 677 B1**

8. Panneau de contreplaqué en tiges, comprenant une couche centrale constituée d'une pluralité de tiges de bois orientées parallèlement les unes aux autres et collées ensemble et de deux couches de couverture qui sont collées des deux côtés transversalement à la couche centrale, **caractérisé en ce que** la colle avec laquelle les petites tiges de bois de la couche centrale sont collées ensemble et les deux couches de couverture sont collées sur la couche centrale présente une proportion de graphite expansé, la proportion en masse $\omega$ du constituant de graphite expansé $\omega = m_{Blähgraphit} : (m_{Blähgraphit} + m_{Leim})$ étant comprise entre 9/100 et 1/3, $m_{Blähgraphit}$ étant la masse du constituant de graphite expansé et $m_{Leim}$ étant la masse du constituant de colle.

9. Panneau de contreplaqué en tiges selon la revendication 8, **caractérisé en ce que** les couches de couverture (3, 4) se composent de matériaux de plaque difficilement inflammables.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 233120 A
- DE 600000 C
- CH 230120 A
- FR 896990 A
- GB 1439582 A